(19)

Europäisches Patentamt
European Patent Office
Office européen des brevets

(11) **EP 4 708 752 A1**

(12) **EUROPEAN PATENT APPLICATION**
published in accordance with Art. 153(4) EPC

(43) Date of publication:
**11.03.2026 Bulletin 2026/11**

(51) International Patent Classification (IPC):
***H04L 5/00*** *(2006.01)*

(21) Application number: **24802506.6**

(52) Cooperative Patent Classification (CPC):
**H04L 5/00; H04L 27/26**

(22) Date of filing: **05.01.2024**

(86) International application number:
**PCT/CN2024/070906**

(87) International publication number:
**WO 2024/230217 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.05.2023 CN 202310516574**

(71) Applicant: **ZTE Corporation
Shenzhen, Guangdong 518057 (CN)**

(72) Inventors:
• **SI, Yuan
Shenzhen, Guangdong 518057 (CN)**
• **ZHANG, Shujuan
Shenzhen, Guangdong 518057 (CN)**
• **YANG, Jun
Shenzhen, Guangdong 518057 (CN)**
• **CHEN, Yijian
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **DEMODULATION REFERENCE SIGNAL TRANSMISSION METHOD AND APPARATUS, AND STORAGE MEDIUM**

(57) The present application relates to the technical field of communications. Provided are a demodulation reference signal transmission method and apparatus, and a storage medium, which are used for reducing resource overheads of a demodulation reference signal and improving a resource utilization rate. The method comprises: determining a time-frequency resource for signal transmission, wherein the time-frequency resource comprises N resource blocks, N being a positive integer; determining a mapping relationship between a demodulation reference signal and the time-frequency resource, which correspond to signal transmission; and according to the mapping relationship, mapping the demodulation reference signal in the time-frequency resource, and then sending same, wherein the demodulation reference signal occupies x resource blocks, x being a positive integer less than N.

Determine a time-frequency resource for signal transmission, wherein the time-frequency resource comprises N resource blocks, N being a positive integer — S101

Determine a mapping relationship between a demodulation reference signal and the time-frequency resource, which correspond to signal transmission — S102

According to the mapping relationship, map the demodulation reference signal in the time-frequency resource, and then send same, wherein the demodulation reference signal occupies x resource blocks, x being a positive integer less than N — S103

FIG. 2

## Description

The present disclosure claims a priority to Chinese Patent Application No. 202310516574.3, and filed on May 08, 2023, the entire content of which is incorporated into the present application by reference.

TECHNICAL FIELD

The present disclosure relates to the field of communication technologies, and in particular to a demodulation reference signal transmission method, an apparatus, and a storage medium.

BACKGROUND

Long term evolution (Long Term Evolution, LTE) technologies are fourth generation (Fourth Generation, 4G) wireless cellular communication technologies. The LTE system introduces a demodulation reference signal (Demodulation Reference Signal, DMRS) for channel estimation at a receiving end. And, it continues to be used in the fifth generation wireless cellular communication technology.

The transmission of DMRS requires a certain amount of resource overhead, and a number of DMRS configured on a unit time-frequency resource block (RB) is fixed. In some application scenarios with good channel conditions, such as static, slow, and a plurality of direct lines of sight, etc. the same number of DMRSs as in general scenarios is still used for channel estimation, wasting system resources.

SUMMARY

Embodiments of the present disclosure provide a demodulation reference signal transmission method, an apparatus, and a storage medium, for reducing resource overhead of the demodulation reference signal and improving resource utilization.

In an aspect, a demodulation reference signal transmission method is provided, and the method includes:

determining a time-frequency resource for a transmission signal, where the time-frequency resource includes N resource blocks, where N is a positive integer;

determining a mapping relationship between a demodulation reference signal corresponding to a transmission signal and a time-frequency resource; and

mapping the demodulation reference signal to the time-frequency resource according to the mapping relationship and sending the demodulation reference signal, where the demodulation reference signal occupies x resource blocks, and x is a positive integer less than N.

In another aspect, a demodulation reference signal transmission method is provided, and the method includes:

determining a mapping relationship between a demodulation reference signal corresponding to a transmission signal and a time-frequency resource; and

receiving the demodulation reference signal in the time-frequency resource according to the mapping relationship, where the time-frequency resource includes N resource blocks, the demodulation reference signal occupies x resource blocks, N is a positive integer, and x is a positive integer less than N.

In yet another aspect, a demodulation reference signal transmission apparatus is provided, and the apparatus includes:

a processing module, configured to determine a time-frequency resource for a transmission signal, where the time-frequency resource includes N resource blocks, and N is a positive integer;

the processing module, further configured to determine a mapping relationship between a demodulation reference signal corresponding to the transmission signal and the time-frequency resource;

a communication module, configured to receive the demodulation reference signal in the time-frequency resource according to the mapping relationship, where the time-frequency resource includes N resource blocks, the demodulation reference signal occupies x resource blocks, N is a positive integer, and x is a positive integer less than N.

In yet another aspect, a demodulation reference signal transmission apparatus is provided, and the apparatus includes:

a processing module, configured to determine a mapping relationship between a demodulation reference signal corresponding to a transmission signal and a time-frequency resource;

a communication module, configured to receive the demodulation reference signal in the time-frequency resource according to the mapping relationship, where the time-frequency resource includes N resource blocks, the demodulation reference signal occupies x resource blocks, N is a positive integer, and x is a positive integer less than N.

In yet another aspect, a communication apparatus is provided, and includes: a memory and a processor; the memory is coupled with the processor; the memory is configured to store computer program instructions executable by the processor; and the processor, when executing the computer program instructions, implements the demodulation reference signal transmission method described in any one of the above aspects.

In yet another aspect, a computer readable storage medium is provided, the computer readable storage medium has stored computer program instructions thereon, and the computer program instructions, when executed on a computer (e.g., a communication apparatus or a demodulation reference signal transmission apparatus), implement the demodulation reference signal transmission method described in any one of the above aspects.

In yet another aspect, a computer program product is provided, the computer program product includes computer program instructions, and the computer program instructions, when executed, implement the demodulation reference signal transmission method described in any one of the above embodiments.

In the technical solutions provided in the embodiments of the present disclosure, by sending a demodulation reference signal on a part of resource blocks for a transmission signal, the demodulation reference signal no longer occupies all resource blocks of the transmission signal, thereby reducing the resource overhead of the demodulation reference signal, which is conducive to increasing a number of payloads and improving transmission efficiency of data.

BRIEF DESCRIPTION OF THE DRAWINGS

FIG. 1 is a schematic diagram of an architecture of a communication system, provided by the embodiments of the present disclosure.

FIG. 2 is a first flow chart of a demodulation reference signal transmission method, provided by the embodiments of the present disclosure.

FIG. 3 is a first structural schematic diagram of a time-frequency resource, provided by the embodiments of the present disclosure.

FIG. 4 is a second structural schematic diagram of a time-frequency resource, provided by the embodiments of the present disclosure.

FIG. 5 is a third structural schematic diagram of a time-frequency resource, provided by the embodiments of the present disclosure.

FIG. 6 is a fourth structural schematic diagram of a time-frequency resource, provided by the embodiments of the present disclosure.

FIG. 7 is a second flow chart of a demodulation reference signal transmission method, provided by the embodiments of the present disclosure.

FIG. 8 is a fifth structural schematic diagram of a time-frequency resource, provided by the embodiments of the present disclosure.

FIG. 9 is a sixth structural schematic diagram of a time-frequency resource, provided by the embodiments of the present disclosure.

FIG. 10 is a seventh structural schematic diagram of a time-frequency resource, provided by the embodiments of the present disclosure.

FIG. 11 is a third flow chart of a demodulation reference signal transmission method, provided by the embodiments of the present disclosure.

FIG. 12 is a fourth flow chart of a demodulation reference signal transmission method, provided by the embodiments of the present disclosure.

FIG. 13 is a structural schematic diagram of a demodulation reference signal transmission apparatus, provided by the embodiments of the present disclosure.

FIG. 14 is a structural schematic diagram of another demodulation reference signal transmission apparatus, provided by the embodiments of the present disclosure.

FIG. 15 is a structural schematic diagram of a communication apparatus, provided by the embodiments of the present disclosure.

DETAILED DESCRIPTION

The technical solutions in the embodiments of the present disclosure will be described clearly and completely below in conjunction with the drawings in the embodiments of the present disclosure, and it is obvious that the described embodiments are only a part of the embodiments of the present disclosure, but not all of the embodiments. Based on the embodiments of the present disclosure, all other embodiments obtained by those ordinary skilled in the art without making inventive efforts fall within the scope of protection of the present disclosure.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represents three cases: only A, A and B, and only B. Additionally, "at least one" means one or more, and "multiple/plurality of" means two or more. Words, such as "first" and "second", etc., do not limit the quantity and execution order, and the words, such as "first" and "second", etc., also do not necessarily limit different items.

It should be noted that in the present disclosure, terms such as "exemplary/exemplarily" or "for example" are used to represent examples, illustrations, or descriptions. Any embodiment or design solution described with "exemplary/exemplarily" or "for example" should not be interpreted as being more preferred or advantageous than other embodiments or design solutions. Rather, the usage of the words, such as "exemplary/exemplarily" or "for example", is intended to present relevant concepts in a specific manner.

In related technologies, a transmission of a demodulation reference signal (DMRS) requires a certain amount of resource overhead. If a DMRS is configured for each resource element (RE) in a resource block to perform channel estimation, system resources may be wasted. In this regard, in the embodiments of the present disclosure, by sending a demodulation reference signal on a part of resource blocks for a transmission signal, the demodulation reference signal no longer occupies all resource blocks of the transmission signal, thereby reducing the resource overhead of the demodulation reference signal, which is conducive to increasing a number of payloads and improving transmission efficiency of data.

The technical solutions provided in the embodiments of the present disclosure may be applied to various mobile communication networks, for example, new radio (New Radio, NR) mobile communication networks using the 5th generation mobile communication technology (5G), future mobile communication networks or multiple communication technology fusion systems, etc., which are not limited to the embodiments of the present disclosure.

The network architecture of the mobile communication network (including but not limited to 3G, 4G, 5G and future mobile communication networks) in the embodiments of the present disclosure may include a first communication node and a second communication node. In some examples, the first communication node may be a base station and the second communication node may be a terminal. In another examples, the first communication node may be a terminal, and the second communication node may be a base station. In yet another examples, in a device-to-device communication scenario, both the first communication node and the second communication node may be terminals. The embodiments of the present disclosure are not limited thereto.

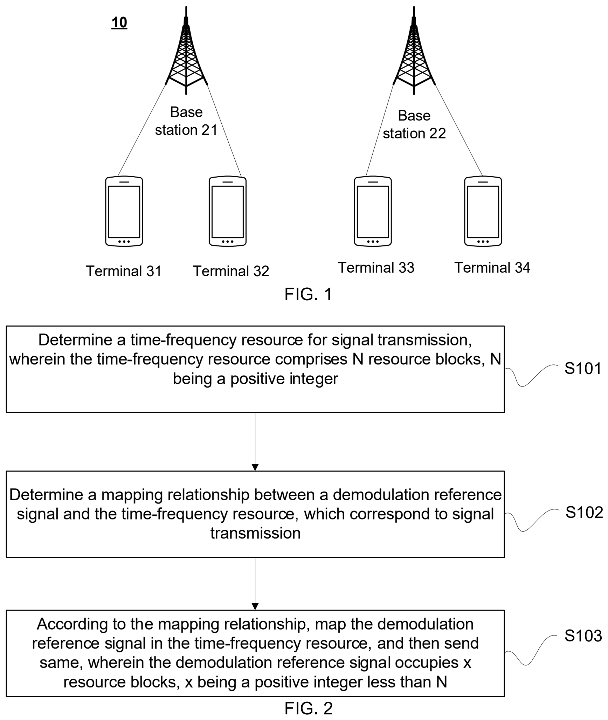

Exemplarily, by taking an example of the first communication node as a base station and the second communication node as a terminal, FIG. 1 shows a schematic diagram of an architecture of a communication system, provided by the embodiments of the present disclosure. As shown in FIG. 1, a communication system 10 includes a plurality of base stations (e.g., base station 21 and base station 22) and a plurality of terminals (e.g., terminal 31, terminal 32, terminal 33, and terminal 34). Herein, the plurality of base stations and the plurality of terminals may be communicatively connected.

Exemplarily, by taking an example of the network side device as a base station and the receiving side device as a terminal, FIG. 1 shows a schematic diagram of an architecture of a communication system, provided by the embodiments of the present disclosure. As shown in FIG. 1, a communication system 10 includes a plurality of base stations (e.g., base station 21 and base station 22) and a plurality of terminals (e.g., terminal 31, terminal 32, terminal 33, and terminal 34). Herein, the plurality of base stations and the plurality of terminals may be communicatively connected.

In some embodiments, the base station is used to provide radio access services to a plurality of terminals. Specifically, a base station provides a service coverage area (also referred to as a cell). A terminal entering the area may communicate with the base station by a wireless signal, to receive a radio access service provided by the base station. The service coverage areas of base station 21 may overlap, and a terminal in an overlapped area may receive radio signals from the plurality of base stations.

In some embodiments, a base station may be connected to a plurality of terminal devices (e.g., base station 21 is connected to terminal 31 and terminal 32). Herein, terminal 31 and terminal 32 may be located in a same cell, or terminal 31 and terminal 32 may also be located in different cells. That is, a base station may provide network services to terminals in a cell, and may also provide network services to terminals in a plurality of cells at the same time.

In some embodiments, a base station may be a base station or an evolutional base station (evolutional node B, eNB or eNodeB) in long term evolution (LTE), long term evolution advanced (LTEA), a base station in a 5G network, or a base station in a future communication system, etc., the base station may include various macro base stations, micro base stations, home base stations, wireless remote base stations, reconfigurable intelligent surfaces (RISs), routers, wireless fidelity (WIFI) devices, or various network side devices in a primary cell and a secondary cell, etc.

In some embodiments, the terminal may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

It should be noted that, FIG. 1 is only an exemplary framework diagram, and a number of devices and names of the various devices included in FIG. 1 are not limited, and in addition to the devices shown in FIG. 1, the communication system may also include other devices, such as a core network device.

The embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

A demodulation reference signal transmission method is provided in the embodiments of the present disclosure, and applied to a first communication node. As shown in FIG. 2, the method includes following steps.

S101, determine a time-frequency resource for a transmission signal, where the time-frequency resource includes N resource blocks, and N is a positive integer.

S102, determine a mapping relationship between a demodulation reference signal corresponding to the transmission signal and the time-frequency resource.

Herein, the mapping relationship is used to indicate a position of a resource block occupied by the demodulation reference signal on the time-frequency resource of the transmission signal. The mapping relationship may also have other names, such as an insertion manner, etc., which is not limited thereto.

In some embodiments, the mapping relationship is used to indicate that the demodulation reference signal occupies x consecutive resource blocks on the N resource blocks. In some embodiments, a value or a value range of x is determined according to at least one of: a subcarrier spacing, a modulation and coding scheme (MCS) order, channel state information (CSI), a number of re-transmissions of hybrid automatic repeat request (HARQ), and a size of a resource block group (RBG).

Herein, the channel state information (CSI) includes at least one of a precoding matrix indicator (PMI), a channel quality indication (CQI), a rank indicator (RI), a layer indicator (LI), a channel state information reference signal resource indicator (CSI-RS), a synchronization signal/physical broadcast channel block resource indicator (SSBRI), layer 1 reference signal received power (L1-RSRP), layer 1 signal-to-noise and interference ratio (L1-SINR) and a capability set index.

In some embodiments, the value or the value range of x satisfies a monotonically decreasing relationship with the subcarrier spacing. In this way, the larger the subcarrier spacing, the wider the bandwidth corresponding to a resource block, thereby reducing a number of resource blocks occupied by the DMRS, so as to achieve a purpose of balancing demodulation performance and resource utilization.

Exemplarily, Table 1 provides corresponding examples of subcarrier spacings and values of x for the present disclosure. Please refer to Table 1, different subcarrier spacings correspond to different values of x. Herein, x1>x2>x3>x4>x5>x6>x7. As the subcarrier spacing increases, the value of x decreases.

Table 1 Corresponding table of subcarrier spacings and value of x

| $\mu$ | 0 | 1 | 2 | 3 | 4 | 5 | 6 |
|---|---|---|---|---|---|---|---|
| $\Delta f = 2^{\mu} *15[kHz]$ | 15 | 30 | 60 | 120 | 240 | 480 | 960 |
| x | x1 | x2 | x3 | x4 | x5 | x6 | x7 |

Exemplarily, Table 2 provides corresponding examples of subcarrier spacings and value ranges of x for the present disclosure. Please refer to Table 2, each subcarrier spacing corresponds to a set X of value ranges of x. The size of each X is N, that is, each X contains N values of x. Herein, $X1=\{x_{11},x_{12},...,x_{1N}\}$, $X2=\{x_{21},x_{22},...,x_{2N}\}$, ..., $X7 =\{x_{71},x_{72},...,x_{7N}\}$,

and there may be intersections between different sets of value ranges.

Table 2 Corresponding table between subcarrier spacings and a set X of value ranges of x

| $\mu$ | 0 | 1 | 2 | 3 | 4 | 5 | 6 |
|---|---|---|---|---|---|---|---|
| $\Delta f = 2^{\mu} *15[kHz]$ | 15 | 30 | 60 | 120 | 240 | 480 | 960 |
| X | X1 | X2 | X3 | X4 | X5 | X6 | X7 |

In some embodiments, the value ranges of x are fixed. For example, [1, 2, 3, 4], [3, 4, 5, 6].

In some embodiments, the value or the value range of x satisfies a monotonically decreasing relationship with the MCS order. Herein, MCS includes a modulation mode and coding rate. In this way, in a case where the MCS order is lower and the channel quality of the transmission signal is worse, the DMRS being configured to occupy more resource blocks may ensure the demodulation performance of the signal.

By taking an example of the MCS configuration of the physical uplink shared channel (PUSCH) in 3GPP TS 38.214, Table 3 provides corresponding examples of MCS configuration and value ranges of x for the present disclosure. Please refer to Table 3, each MCS configuration corresponds to a value $x_i$ of x or a set $X_i$ of value ranges of x. The value of q in the table is a preset value, for example, 1 or 2.

Table 3 Corresponding Table between MCS configuration and values/value ranges of x

| MCS index $I_{MCS}$ | Modulation order $Q_m$ | Bit rate R*1024 | Value $x_i$/Value range $X_i$ |
|---|---|---|---|
| 0 | q | 240/q | $x_0/X_0$ |
| 1 | q | 314/q | $x_1/X_1$ |
| 2 | 2 | 193 | $x_2/X_2$ |
| 3 | 2 | 251 | $x_3/X_3$ |
| 4 | 2 | 308 | $x_4/X_4$ |
| 5 | 2 | 379 | $x_5/X_5$ |
| 6 | 2 | 449 | $x_6/X_6$ |
| 7 | 2 | 526 | $x_7/X_7$ |
| 8 | 2 | 602 | $x_8/X_8$ |
| 9 | 2 | 679 | $x_9/X_9$ |
| 10 | 4 | 340 | $x_{10}/X_{10}$ |
| 11 | 4 | 378 | $x_{11}/X_{11}$ |
| 12 | 4 | 434 | $x_{12}/X_{12}$ |
| 13 | 4 | 490 | $x_{13}/X_{13}$ |
| 14 | 4 | 553 | $x_{14}/X_{14}$ |
| 15 | 4 | 616 | $x_{15}/X_{15}$ |
| 16 | 4 | 658 | $x_{16}/X_{16}$ |
| 17 | 6 | 466 | $x_{17}/X_{17}$ |
| 18 | 6 | 517 | $x_{18}/X_{18}$ |
| 19 | 6 | 567 | $x_{19}/X_{19}$ |
| 20 | 6 | 616 | $x_{20}/X_{20}$ |
| 21 | 6 | 666 | $x_{21}/X_{21}$ |
| 22 | 6 | 719 | $x_{22}/X_{22}$ |
| 23 | 6 | 772 | $x_{23}/X_{23}$ |
| 24 | 6 | 822 | $x_{24}/X_{24}$ |
| 25 | 6 | 873 | $x_{25}/X_{25}$ |

(continued)

| MCS index $I_{MCS}$ | Modulation order $Q_m$ | Bit rate R*1024 | Value $x_i$/Value range $X_i$ |
|---|---|---|---|
| 26 | 6 | 910 | $x_{26}/X_{26}$ |
| 27 | 6 | 948 | $x_{27}/X_{27}$ |
| 28 | q | reserved | $x_{25}/X_{28}$ |
| 29 | 2 | reserved | $x_{29}/X_{29}$ |
| 30 | 4 | reserved | $x_{30}/X_{30}$ |
| 31 | 6 | reserved | $x_{31}/X_{31}$ |

In some embodiments, the value or value range of x is determined according to the channel type of the transmission signal, and different channel types correspond to different values or value ranges of x. Herein, different channel types include a physical uplink control channel (PUCCH), a PUSCH, a physical downlink control channel (PDCCH), a physical downlink shared channel (PDSCH), a physical broadcast channel (PBCH), a physical sidelink control channel (PSCCH), and a physical sidelink share channel (PSSCH).

In a possible implementation, the value of x being determined according to the number of re-transmissions of the HARQ is specifically implemented as that: in a case where the HARQ re-transmission process is not triggered, that is, when the number of re-transmissions of the HARQ is 0, the value of x is x0; if the HARQ process is triggered and the number of re-transmissions of the HARQ is greater than 0, the value of x becomes x1. x0 and x1 are preset values or indicated by control signalings. Herein, the control signaling may be a radio resource control (RRC) signaling, media access control-control element (MAC-CE) or downlink control information (DCI).

In some embodiments, the values or the value ranges of x satisfy a monotonically increasing relationship with the number of re-transmissions of the HARQ. For example, during an initial transmission, the value of x is x0, in a case where an i-th re-transmission of the HARQ is triggered, the value of x is $x_i$, then xi=x0+i*Δx , and Δx is a positive integer. The greater the number of re-transmissions of the HARQ, the greater the probability of data transmission failure. Therefore, increasing the number of resource blocks occupied by the DMRS may improve the demodulation performance of the signal, thereby increasing the probability of successful data transmission.

In some embodiments, the value of x is equal to the size of the resource block group or an integer multiple of the size of the resource block group. Herein, a resource block group contains one or more resource blocks.

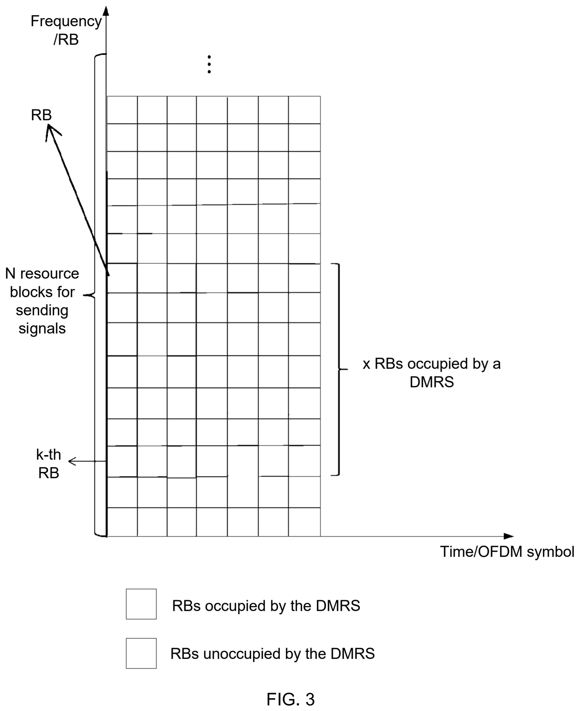

Exemplarily, as shown in FIG. 3, in a case where the N resource blocks for the transmission signal are consecutive in the frequency domain, the demodulation reference signal consecutively occupies x resource blocks starting from a k-th resource block of the N resource blocks for the transmission signal, where k≤N-x+1 and k is a non-negative integer. For example, the x resource blocks occupied by the demodulation reference signal are first x resource blocks among the N resource blocks.

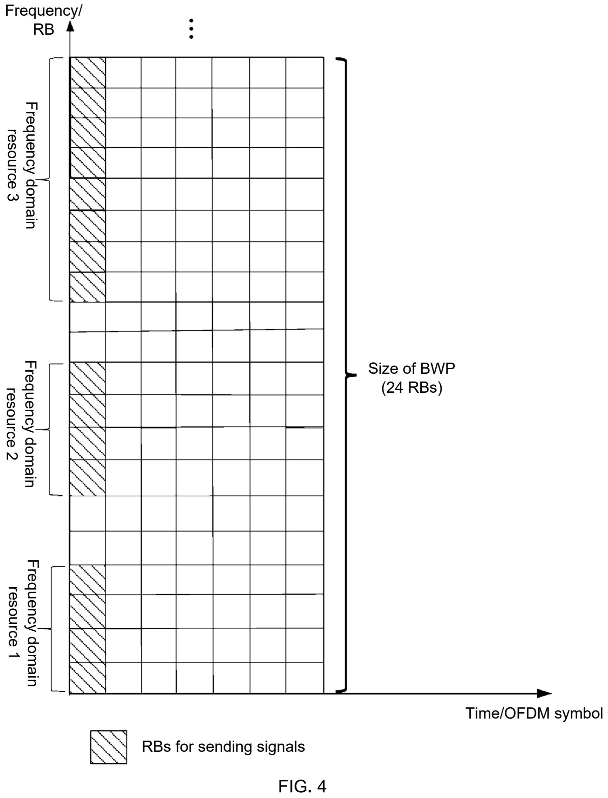

As another example, in a case where the N resource blocks for the transmission signal are non-consecutive in the frequency domain, the demodulation reference signal consecutively occupies x resource blocks starting from the k-th resource block among the consecutive resource blocks for the transmission signal. For example, as shown in FIG. 4, the bandwidth part (BWP) allocated for the transmission signal have 24 resource blocks (RBs). The size of the resource block group (RBG) is 4, that is, 4 RBs constitute an RBG. Among the 24 RBs, only some RBGs may be used for the transmission signal. The DMRS may consecutively insert into x RBs starting from the k-th RB in any one of parts of a frequency-domain resource 1, a frequency-domain resource 2, and a frequency-domain resource 3 in FIG. 4.

In some embodiments, the mapping relationship is used to indicate that the x resource blocks occupied by the demodulation reference signal are non-consecutive x resource blocks among the N resource blocks.

As an example, there is a resource block that is occupied by the demodulation reference signal in every y resource blocks starting from a k-th resource block among the N resource blocks, where y is a positive integer.

Exemplarily, assuming that there are a total of $N_{RB}$ RBs in the time-frequency resource blocks allocated to the communicating parties. In this case, $2 \leq y \leq N_{RB}$, define that the resource block occupied by the DMRS starts from the k-th RB in $N_{RB}$ RBs, where 1≤k≤$N_{RB}$. The RB number $N_{DMRS}^{RB}$ occupied by the DMRS may be calculated using Formula (1):

$$N_{DMRS}^{RB} = k + y(n-1)$$
$$n = 1,2,...,n_{max}$$

$$(1)$$

Herein, $n_{max}$ is a positive integer such that $N_{DMRS}^{RB} \leq N_{RB}$ . For example, when $N_{RB}$ =50, k=1, y=4, the RB numbers $N_{DMRS}^{RB}$ occupied by the DMRS are 1, 5, 9, 13, ..., 49.

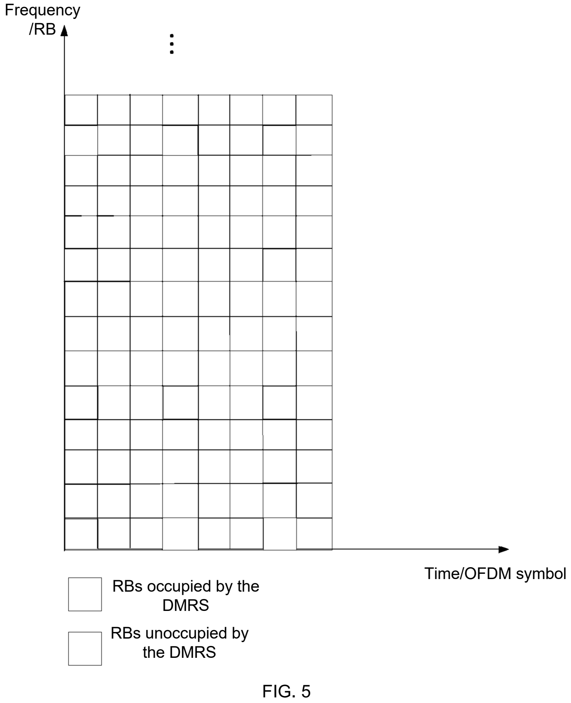

Exemplarily, FIG. 5 provides a structural schematic diagram of the time-frequency resources. As shown in FIG. 5, there is a resource block that is occupied by the demodulation reference signal in every 4 resource blocks starting from a first resource block among the N resource blocks of the transmission signal.

As another example, there are m resource blocks that are occupied by the demodulation reference signal in every y resource blocks starting from a k-th resource block among the N resource blocks; where y is a positive integer, and m is a positive integer less than or equal to y.

Exemplarily, assuming that there are a total of $N_{RB}$ RBs in the time-frequency resource blocks allocated to the communicating parties. In this case, $2 \leq y \leq N_{RB}$, define that the resource block occupied by the DMRS starts from the k-th RB in $N_{RB}$ RBs, where $1 \leq k \leq N_{RB}$. The RB number $N_{DMRS}^{RB}$ occupied by the DMRS may be calculated using Formula (2):

$$N_{DMRS}^{RB} = k + y(n-1) + m$$
$$n = 1,2,...,n_{max}, \quad m = 0,1,2,...,M-1 \qquad (2)$$

Herein, $n_{max}$ is a positive integer such that $N_{DMRS}^{RB} \leq N_{RB}$. For example, when $N_{RB}$=20, y=5, m=3, k=2, the RB numbers $N_{DMRS}^{RB}$ carrying the DMRS are 2, 3, 4, 7, 8, 9, 12, 13, 14, 17, 18, and 19.

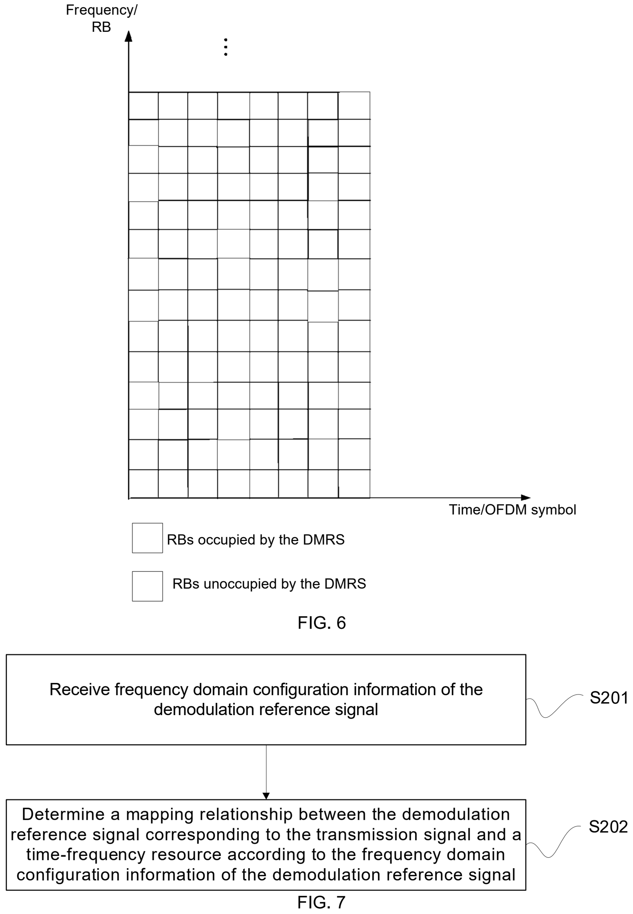

Exemplarily, FIG. 6 provides a structural schematic diagram of the time-frequency resources. As shown in FIG. 6, there are 3 resource block that are occupied by the demodulation reference signal in every 5 resource blocks starting from a second resource block among the N resource blocks of the transmission signal.

In some embodiments, a value or a value range of y is determined according to at least one of: a subcarrier spacing, an MCS order, a channel type, channel state information, a number of re-transmissions of an HARQ, and a size of a resource block group.

Herein, the values or the value ranges of y are different corresponding to different subcarrier spacings, MCS orders, channel types, channel state information, the number of re-transmissions of the HARQ, and the sizes of resource block group.

In some embodiments, a value or a value range of m is determined according to at least one of: a subcarrier spacing, an MCS order, a channel type, channel state information, a number of re-transmissions of the HARQ, and a size of a resource block group.

Herein, the values or the value ranges of m are different corresponding to different subcarrier spacings, MCS orders, channel types, channel state information, the number of re-transmissions of the HARQ, and the sizes of resource block group.

In some embodiments, the values or the value ranges of m satisfy the monotonically decreasing relationship with the subcarrier spacing.

In some embodiments, the values or the value ranges of m satisfy a monotonically decreasing relationship with the MCS order.

In some embodiments, the values or the value ranges of m satisfy a monotonically increasing relationship with the number of re-transmissions of the HARQ.

In some embodiments, the values or the value ranges of y satisfy a monotonically increasing relationship with the subcarrier spacing.

In some embodiments, the values or the value ranges of y satisfy a monotonically increasing relationship with the MCS order.

In some embodiments, the values or the value ranges of y satisfy a monotonically decreasing relationship with the number of re-transmissions of the HARQ.

In some embodiments, in a case where the values or the value ranges of y are determined according to the size of the resource block group, the value of y may be equal to the resource block group size, or the value of y may be an integer multiple of the resource block size. For example, there are m resource blocks occupied by demodulation reference signals in every y resource block groups.

S103, map the demodulation reference signal to the time-frequency resource according to the mapping relationship and send the demodulation reference signal, where the demodulation reference signal occupies x resource blocks, and x is a positive integer less than N.

In some embodiments, the resource block occupied by the demodulation reference signal includes a plurality of resource elements (REs), and an RE among the plurality of REs is used to carry the demodulation reference signal. In this way, the resource overhead of the demodulation reference signal is reduced and the resource utilization is improved.

In some embodiments, the base station performs downlink transmission, and the downlink transmission includes data carried on the PDSCH or data carried on the PDCCH. The base station sends downlink data to the terminal. The sent downlink data may be carried on the PDSCH, may also carried on the PDCCH, or may also carried on the PBCH.

Based on this, the demodulation reference signal is sent on a part of the resource blocks for the transmission signal, the demodulation reference signal no longer occupies all resource blocks of the transmission signal, thereby reducing the resource overhead of the demodulation reference signal, which is conducive to increasing a number of payloads and improving the resource utilization.

Exemplarily, the demodulation reference signal transmission method is provided in the embodiments of the present disclosure, and applied to a first communication node. As shown in FIG. 7, the method includes following steps.

S201, receive frequency domain configuration information of the demodulation reference signal.

Herein, the frequency domain configuration information is used to determine a mapping relationship between a demodulation reference signal corresponding to the transmission signal and the time-frequency resource.

In some embodiments, the frequency domain configuration information is carried in at least one of a broadcast message, a system message, and a control signaling.

Herein, the system message includes a master information block (MIB) and a system information block (SIB). The control signaling includes an RRC, an MAC-CE and DCI.

In some embodiments, the frequency domain configuration information of the demodulation reference signal is determined according to at least one of: CSI, a number of users, and an HARQ configuration. Herein, the CSI includes at least one of a PMI, a CQI, an RI, a LI, a CRI, an SSBRI, L1-RSRP, L1-SINR and a capability set index.

In some embodiments, different channel qualities correspond to different frequency domain configuration information, where the channel quality may be determined through the CQI feedback of the user.

In some embodiments, the number of users is positively proportional to the number x of resource blocks occupied by the demodulation reference signal in the N resource blocks for the transmission signal. It can be understood that, as the number of users increases, the channel environment becomes more complex. Therefore, by increasing the number of resource blocks occupied by the demodulation reference signal, the demodulation performance of the signal may be improved, which is beneficial for the first communication node to correctly demodulate the reference signal in a complex channel environment.

In some embodiments, the frequency domain configuration information of the demodulation reference signal includes at least one of following configuration parameters: a value of x, a value of y, the value of k, and a value of m.

In some embodiments, the frequency domain configuration information is time-varying.

In some embodiments, updated frequency domain configuration information is received. Herein, the updated frequency domain configuration information includes an updated configuration parameter. It should be understood that, the updated frequency domain configuration information only carries the updated configuration parameter but does not carry non-updated configuration information, which can effectively reduce the signaling overhead of the updated frequency domain configuration information.

In some embodiments, in a case where the CQI value fed back by the user changes, the channel quality in the frequency domain configuration information is updated, to obtain the updated frequency domain configuration information.

S202, determine a mapping relationship between the demodulation reference signal corresponding to the transmission signal and a time-frequency resource according to the frequency domain configuration information of the demodulation reference signal.

In some embodiments, the mapping relationship between the demodulation reference signal corresponding to the transmission signal and the time-frequency resource includes a first mapping relationship, a second mapping relationship, and a third mapping relationship. Herein, the first mapping relationship is that, the x consecutive resource blocks are resource blocks occupied by the demodulation reference signal starting from the k-th resource block among the N resource blocks. The second mapping relationship is that, there is a resource block that is occupied by the demodulation reference signal in every y resource blocks starting from the k-th resource block among the N resource blocks. The third mapping relationship is that, there are m resource block that are occupied by the demodulation reference signal in every y resource blocks starting from the k-th resource block among the N resource blocks; where y is a positive integer, and m is a positive integer less than or equal to y.

In some embodiments, in a case where the mapping relationship is the first mapping relationship, the frequency domain configuration information of the demodulation reference signal includes a value of k and a value of x.

In some embodiments, in a case where the mapping relationship is the second mapping relationship, the frequency domain configuration information of the demodulation reference signal includes the value of x, the value of k, and the value of y.

In some embodiments, in a case where the mapping relationship is the third mapping relationship, the frequency domain configuration information of the demodulation reference signal includes the value of x, the value of k, the value of y, and the value of m.

In some embodiments, the mapping relationship between the demodulation reference signal corresponding to the transmission signal and the time-frequency resource may be time-varying, and the base station may inform the terminal of a changed mapping relationship between the demodulation reference signal corresponding to the transmission signal and the time-frequency resources through the control signaling.

For example, when the downlink transmission is performed, the base station first informs the terminal that the mapping relationship between the demodulation reference signal corresponding to the transmission signal and the time-frequency resource is the first mapping relationship through the control signaling or system message, and then maps the demodulation reference signal in the time-frequency resource occupied by the downlink transmission according to the first mapping relationship and sends the demodulation reference signal to the terminal. The base station may send the control signaling to the terminal again to inform that the mapping relationship between the demodulation reference signal corresponding to the transmission signal and the time-frequency resource is changed to the second mapping relationship, and map the demodulation reference signal in the time-frequency resource occupied by the downlink transmission according to the second mapping relationship and send the demodulation reference signal to the terminal.

In some embodiments, in a case where the mapping relationship between the demodulation reference signal and the time-frequency resource changes, the base station may inform the terminal of the changed configuration parameter in the frequency domain configuration information of the demodulation reference signal through the control signaling.

In some embodiments, the mapping relationship between the demodulation reference signal corresponding to the transmission signal and the time-frequency resource is determined as that x resource blocks starting from the k-th resource block among the N resource blocks for the transmission signal are consecutively occupied according to the frequency domain configuration information of the demodulation reference signal.

In some embodiments, the mapping relationship between the demodulation reference signal corresponding to the transmission signal and the time-frequency resource is determined as that, there is a resource block that is occupied by the demodulation reference signal in every y resource blocks starting from the k-th resource block among the N resource blocks according to the frequency domain configuration information of the demodulation reference signal.

In some embodiments, the mapping relationship between the demodulation reference signal corresponding to the transmission signal and the time-frequency resource is determined as that, there are m resource blocks that are occupied by the demodulation reference signal in every y resource blocks starting from the k-th resource block among the N resource blocks according to the frequency domain configuration information of the demodulation reference signal; where y is a positive integer, and m is a positive integer less than or equal to y.

In some embodiments, for different sending ends, in a same resource block group, the time-frequency resources occupied by the demodulation reference signal are the same.

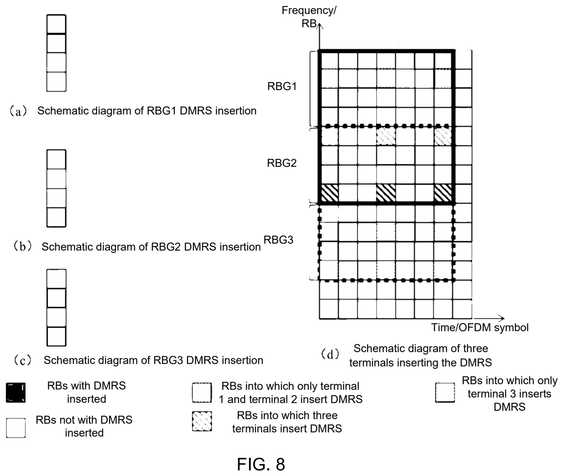

Exemplarily, FIG. 8 provides a schematic structural diagram of a time-frequency resource. As shown in FIG. 8, the size of the RBG in the figure is 4. The resource blocks occupied by the DMRS in RBG1 occupy two consecutive RBs starting from the first RB, as shown in (a) in FIG. 8; the mapping relationship between the DMRS in RBG2 and the time-frequency resource is shown in (b) in FIG. 8, and the RB index inserted with the DMRS is calculated using Formula (1), where k=1, y=3, and n=1, 2; the mapping relationship between the DMRS in RGB3 and the time-frequency resource is shown in (c) in FIG. 8, and the RB index inserted with the DMRS is calculated using Formula (1), where k=2, y=1, and n=1, 2. Assuming that the time-frequency resources of terminal 1 and terminal 2 are RBG1 and RBG2 (solid-line boxes in the figure), time-frequency resource blocks of terminal 3 are RBG2 and RBG3 (dashed-line boxes in the figure), and the time domain period inserted in the DMRS is three OFDM symbols, the schematic diagram of three terminals inserting the DMRS is shown in (d) of FIG. 8. In the frequency domain block group RBG2 commonly occupied by three terminals, the mapping relationship between DMRSs and time-frequency resources of different terminals is the same. Furthermore, different resource block groups may adopt different mapping relationships.

In some embodiments, for different sending ends, the time-frequency resources occupied by the demodulation reference signal are fixed.

Exemplarily, assuming that all available frequency resources have M RBs in total, and each RB has a unique index m. Then the RB index set inserted into the DMRS is $I=\{i_1, i_2, i_3, ...i_n\}$, where $i \le M$. The index set I is acquired by adopting any one of the methods in the above embodiments. After the index set I is generated, it may be preconfigured in both the sending end device and receiving end device. The frequency domain resources allocated to the both the sending end and receiving end for signal transmission may be represented by RB indexes. Assuming that the frequency domain resources allocated to both the sending end and receiving end are an index set. $\{m_1, m_2, m_3, ...m_n\}$, then the index number inserted into the DMRS is the intersection of set I and the index set.

In some embodiments, for different sending ends, the time-frequency resources occupied by the demodulation reference signal on a bandwidth part (BWP) are the same.

Exemplarily, within one or several BWPs, which may also be a frequency range, the index set of the RB is {0, 1, 2, ..., N-1}, where N is a number of RBs in the frequency range. Then, within the frequency range, the index numbers inserted in the DMRS are a fixed set $I=\{i_1, i_2, i_3, ...i_n\}$, where $i \le N$, for different frequency ranges, the set I may be different. The manner of inserting the DMRS (i.e., the index of the DMRS) may be acquired by adopting the method in any one of the above embodiments.

In some embodiments, in a case where a base station transmits signals to a plurality of terminals simultaneously,

and the time-frequency resources of the transmission signals corresponding to the plurality of terminals are the same, the resource blocks occupied by the demodulation reference signals corresponding to the plurality of terminals are the same.

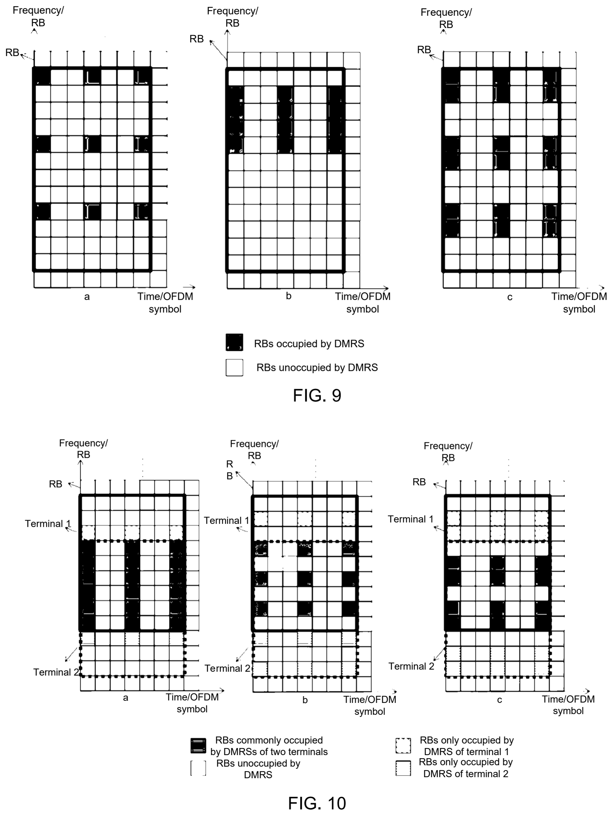

Exemplarily, as shown in FIG. 9, the black box portions in the figure are the downlink time-frequency resource blocks for transmission by the two terminals. The time-frequency resource blocks for downlink transmission of the two terminals are the same, so the resource blocks occupied by the demodulation reference signals corresponding to the two terminals occupy are the same. That is, as shown in (a) of FIG. 9, starting from the first RB in the black box, an RB in every four RBs is a resource block occupied by the demodulation reference signals corresponding to the two terminals. As shown in part (b) of FIG. 9, the resource blocks occupied by the demodulation reference signals corresponding to the two terminals are four consecutive RBs starting from the eighth RB in the black box. As shown in part (c) of FIG. 9, starting from the first RB in the black box, there are two RBs in every four RBs that are resource blocks occupied by demodulation reference signals corresponding to the two terminals.

In some embodiments, in a case where a base station transmits signals to a plurality of terminals simultaneously, and the time-frequency resources of the transmission signals corresponding to the plurality of terminals are partially the same, then in the time-frequency resources multiplexed by the plurality of terminals, the resource blocks occupied by the demodulation reference signals corresponding to the plurality of terminals are the same.

Exemplarily, as shown in FIG. 10, the time-frequency resources of the transmission signals of the two terminals are only partially the same. The time-frequency resource block of the transmission signal of terminal 1 is the resource block inside the solid box in the figure, and the time-frequency resource block of the transmission signal of terminal 2 is the resource block inside the dotted box in the figure. As shown in part (a) of FIG. 10, the resource blocks multiplexed by the two terminals are 6 consecutive RBs starting from the first RB in the solid line box, and the resource blocks commonly occupied by the demodulation reference signals corresponding to the two terminals are 6 consecutive RBs starting from the first RB in the solid line box. As shown in part (b) of FIG. 10, the resource blocks multiplexed by the two terminals are 6 consecutive RBs starting from the first RB in the solid line box, and there is an RB that is a resource block commonly occupied by the demodulation reference signals corresponding to the two terminals in every two RBs, starting from the first RB in the solid line box. As shown in part (c) of FIG. 10, the resource blocks multiplexed by the two terminals are 6 consecutive RBs starting from the first RB in the solid line box, and there are 2 RBs that are resource blocks commonly occupied by the demodulation reference signals corresponding to the two terminals in every 3 RBs, starting from the first RB in the solid line box.

In some embodiments, in a case where a base station transmits signals to the plurality of terminals simultaneously and the time-frequency resources of the transmission signals corresponding to the plurality of terminals are partially the same, the resource blocks occupied by the demodulation reference signals corresponding to the plurality of terminals only exist in the time-frequency resources multiplexed by the plurality of terminals, and the resource blocks occupied by the demodulation reference signals corresponding to the terminals do not exist in other time-frequency resources except the time-frequency resources multiplexed by the plurality of terminals.

Exemplarily, continuing to refer to FIG. 10, in other time-frequency resources except the time-frequency resources multiplexed by terminal 1 and terminal 2, only the resource blocks occupied by the terminal 1 may not have a demodulation reference signal, and only the resource blocks occupied by the terminal 2 may not have a demodulation reference signal.

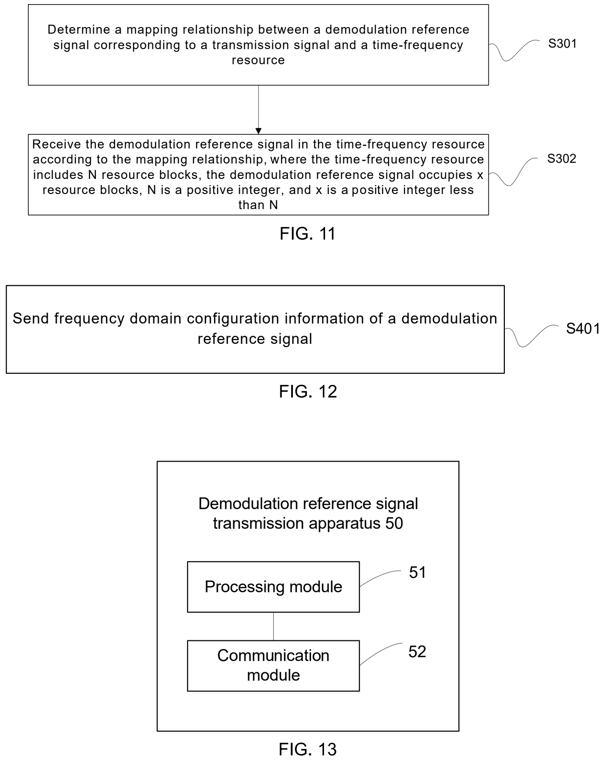

Exemplarily, the demodulation reference signal transmission method is provided in the embodiments of the present disclosure, and applied to a second communication node. As shown in FIG. 11, the method includes following steps.

S301, determine a mapping relationship between a demodulation reference signal corresponding to the transmission signal and the time-frequency resource.

S302, receive the demodulation reference signal in the time-frequency resource according to the mapping relationship, where the time-frequency resource includes N resource blocks, the demodulation reference signal occupies x resource blocks, N is a positive integer, and x is a positive integer less than N.

In some embodiments, the mapping relationship is used to indicate that the demodulation reference signal occupies x consecutive resource blocks on the N resource blocks.

In some embodiments, a value or a value range of x is determined according to at least one of: a subcarrier spacing, a modulation and coding scheme (MCS) order, channel state information (CSI), a number of re-transmissions of hybrid automatic repeat request (HARQ), and a size of a resource block group.

In some embodiments, the values or the value ranges of x satisfy at least one of following relationships: the values or the value ranges of x satisfying a monotonically decreasing relationship with the subcarrier spacing; the values or the value ranges of x satisfying a monotonically decreasing relationship with the MCS order; the values or the value ranges of x satisfying a monotonically increasing relationship with the number of re-transmissions of the HARQ.

In some embodiments, the mapping relationship is used to indicate that the x resource blocks occupied by the demodulation reference signal are non-consecutive x resource blocks among the N resource blocks.

In some embodiments, there is a resource block that is occupied by the demodulation reference signal in every y resource blocks starting from a k-th resource block among the N resource blocks; or there are m resource blocks that are occupied by the demodulation reference signal in every y resource blocks starting from the k-th resource block among the N resource blocks; where y is a positive integer, and m is a positive integer less than or equal to y.

In some embodiments, a value or a value range of y is determined according to at least one of: a subcarrier spacing, an MCS order, a channel type, channel state information, a number of re-transmissions of an HARQ, and a size of a resource block group.

In some embodiments, a value or a value range of m is determined according to at least one of: a subcarrier spacing, an MCS order, a channel type, channel state information, a number of re-transmissions of the HARQ, and a size of a resource block group.

Exemplarily, another demodulation reference signal transmission method is provided in the embodiments of the present disclosure, and applied to a second communication node. As shown in FIG. 12, the method includes following steps.

S401, send frequency domain configuration information of a demodulation reference signal.

Herein, the frequency domain configuration information is used to determine a mapping relationship between a demodulation reference signal corresponding to the transmission signal and the time-frequency resource.

In some embodiments, the frequency domain configuration information of the demodulation reference signal is carried in at least one of a broadcast message, a system message, and a control signaling.

In some embodiments, the frequency domain configuration information of the demodulation reference signal is determined according to at least one of: channel state information CSI, a number of users, and an HARQ configuration.

In some embodiments, the frequency domain configuration information of the demodulation reference signal includes at least one of following configuration parameters: a value of x, a value of y, the value of k, and a value of m.

In some embodiments, updated frequency domain configuration information is sent, where the updated frequency domain configuration information includes an updated configuration parameter.

In some embodiments, the resource block occupied by the demodulation reference signal includes a plurality of resource elements, and a resource element among the plurality of resource elements is used to carry the demodulation reference signal.

In some embodiments, for different receiving ends, within the same resource block group or on a portion of the bandwidth, the time-frequency resources occupied by the demodulation reference signal are the same.

In some embodiments, for different receiving ends, the time-frequency resources occupied by the demodulation reference signal are fixed.

Based on this, the base station sends the frequency domain configuration information of the demodulation reference signal to the terminal timely, so that the terminal may determine the x resource blocks occupied by the demodulation reference signal among the N resource blocks for the transmission signal according to the frequency domain configuration information of the demodulation reference signal, thereby improving the transmission efficiency of the data.

The above introduces the solutions of the embodiments of the present disclosure mainly from the perspective of methods. A demodulation reference signal transmission apparatus is also shown below, which is used to perform the demodulation reference signal transmission method in any of the above embodiments and possible implementations thereof. It can be understood that the demodulation reference signal transmission apparatus includes the corresponding hardware structures and/or software modules for performing various functions in order to implement the demodulation reference signal transmission method, and those skilled in the art should easily recognize that the present disclosure can be implemented in the form of hardware or a combination of hardware and computer software, in conjunction with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such implementation should not be considered beyond the scope of the present disclosure.

In the embodiments of the present disclosure, the demodulation reference signal transmission apparatus may be divided into functional modules according to the above-mentioned method embodiments, and for example, each functional module may be divided corresponding to each function, or two or more functions may be integrated into one functional module. The above integrated module is implemented in the form of hardware or in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

FIG. 13 is a demodulation reference signal transmission apparatus provided by the embodiments of the present disclosure, applied to a second communication node. The demodulation reference signal transmission apparatus 50 includes a processing module 51 and a communication module 52.

In some embodiments, the processing module 51 is configured to determine a time-frequency resource for a transmission signal, where the time-frequency resource includes N resource blocks, and N is a positive integer;

the processing module 51 is further configured to determine a mapping relationship between a demodulation reference signal corresponding to the transmission signal and the time-frequency resource; and
the communication module 52 is configured to map the demodulation reference signal in the time-frequency resource according to the mapping relationship and sending the demodulation reference signal, where the demodulation reference signal occupies x resource blocks, and x is a positive integer less than N.

The mapping relationship is used to indicate that the demodulation reference signal occupies x consecutive resource blocks on the N resource blocks.
In some embodiments, a value or a value range of x is determined according to at least one of: a subcarrier spacing, a modulation and coding scheme (MCS) order, channel state information (CSI), a channel type, a number of re-transmissions of hybrid automatic repeat request (HARQ), and a size of a resource block group.
In some embodiments, the value or the value range of x satisfies at least one of following relationships:

the value or the value range of x satisfying a monotonically decreasing relationship with the subcarrier spacing;
the value or value range of x satisfying a monotonically decreasing relationship with the MCS order;
the value or the value range of x satisfying a monotonically increasing relationship with the number of re-transmissions of the HARQ.

In some embodiments, the mapping relationship is used to indicate that the x resource blocks occupied by the demodulation reference signal are x non-consecutive resource blocks among the N resource blocks.
In some embodiments, there is a resource block that is occupied by the demodulation reference signal in every y resource blocks, starting from a k-th resource block among the N resource blocks; or
there are m resource blocks that are occupied by the demodulation reference signal in every y resource blocks, starting from a k-th resource block among the N resource blocks; where y is a positive integer, and m is a positive integer less than or equal to y.
In some embodiments, a value or a value range of y is determined according to at least one of: a subcarrier spacing, an MCS order, a channel type, channel state information, a number of re-transmissions of an HARQ, and a size of a resource block group.
In some embodiments, a value or a value range of m is determined according to at least one of: a subcarrier spacing, an MCS order, a channel type, channel state information, a number of re-transmissions of an HARQ, and a size of a resource block group.
In some embodiments, the communication module 52 is configured to receive frequency domain configuration information of the demodulation reference signal, where the frequency domain configuration information is used to determine the mapping relationship between the demodulation reference signal corresponding to the transmission signal and the time-frequency resource.
In some embodiments, the frequency domain configuration information of the demodulation reference signal is carried in at least one of a broadcast message, a system message, and a control signaling.
In some embodiments, the frequency domain configuration information of the demodulation reference signal is determined according to at least one of: channel state information (CSI), a number of users, and an HARQ configuration.
In some embodiments, the frequency domain configuration information of the demodulation reference signal includes at least one of following configuration parameters: the value of x, the value of y, the value of k, and the value of m.
In some embodiments, the communication module 52 is configured to receive updated frequency domain configuration information, where the updated frequency domain configuration information includes an updated configuration parameter.
In some embodiments, a resource block occupied by the demodulation reference signal includes a plurality of resource elements, and a resource element among the plurality of resource elements is used to carry the demodulation reference signal.
In some embodiments, for different sending ends, time-frequency resources occupied by the demodulation reference signal within a same resource block group or on a bandwidth part are the same.
In some embodiments, for different sending ends, time-frequency resources occupied by the demodulation reference signal are fixed.

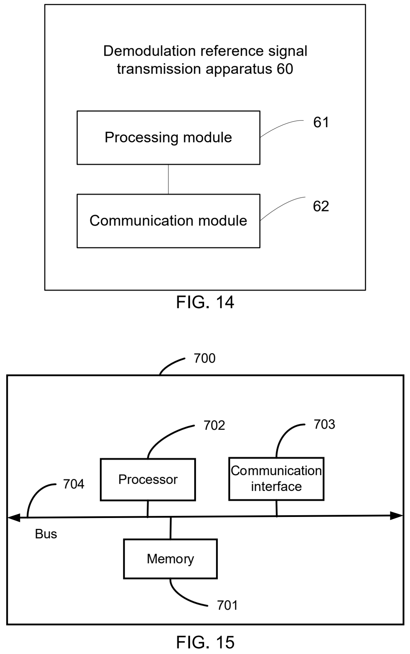

FIG. 14 is a demodulation reference signal transmission apparatus provided by the embodiments of the present disclosure, applied to a second communication node. The demodulation reference signal transmission apparatus 60 includes a processing module 61 and a communication module 62.
In some embodiments, the processing module 61 is configured to determine a mapping relationship between a demodulation reference signal corresponding to a transmission signal and a time-frequency resource; and

the communication module 62 is configured to receive the demodulation reference signal in the time-frequency resource according to the mapping relationship, where the time-frequency resource includes N resource blocks, the demodulation reference signal occupies x resource blocks, N is a positive integer, and x is a positive integer less than N.

In some embodiments, the mapping relationship is used to indicate that the demodulation reference signal occupies x consecutive resource blocks on the N resource blocks.

In some embodiments, a value or a value range of x is determined according to at least one of: a subcarrier spacing, a modulation and coding scheme (MCS) order, channel state information (CSI), a number of re-transmissions of hybrid automatic repeat request (HARQ), and a size of a resource block group.

In some embodiments, the value or the value range of x satisfies at least one of following relationships:

the value or the value range of x satisfying a monotonically decreasing relationship with the subcarrier spacing;
the value or value range of x satisfying a monotonically decreasing relationship with the MCS order;
the value or the value range of x satisfying a monotonically increasing relationship with the number of re-transmissions of the HARQ.

In some embodiments, the mapping relationship is used to indicate that the x resource blocks occupied by the demodulation reference signal are x non-consecutive resource blocks among the N resource blocks.

In some embodiments, there is a resource block that is occupied by the demodulation reference signal in every y resource blocks, starting from a k-th resource block among the N resource blocks; or
there are m resource blocks that are occupied by the demodulation reference signal in every y resource blocks, starting from a k-th resource block among the N resource blocks; where y is a positive integer, and m is a positive integer less than or equal to y.

In some embodiments, a value or a value range of y is determined according to at least one of: a subcarrier spacing, an MCS order, a channel type, channel state information, a number of re-transmissions of an HARQ, and a size of a resource block group.

In some embodiments, a value or a value range of m is determined according to at least one of: a subcarrier spacing, an MCS order, a channel type, channel state information, a number of re-transmissions of an HARQ, and a size of a resource block group.

In some embodiments, the communication module 62 is configured to send frequency domain configuration information of the demodulation reference signal, where the frequency domain configuration information is used to determine the mapping relationship between the demodulation reference signal corresponding to the transmission signal and the time-frequency resource.

In some embodiments, for different receiving ends, time-frequency resources occupied by the demodulation reference signal within a same resource block group or on a bandwidth part are the same.

In some embodiments, for different receiving ends, the time-frequency resources occupied by the demodulation reference signal are fixed.

In a case where the functions of the above integrated modules are implemented in the form of hardware, the embodiments of the present disclosure further provide a possible structure of a communication apparatus, and the communication apparatus is configured to perform the demodulation reference signal transmission method provided in the embodiments of the present disclosure. As shown in FIG. 15, the communication apparatus 700 includes a communication interface 703, a processor 702 and a bus 704. Optionally, the communication apparatus may also include a memory 701.

The processor 702 may implement or perform various exemplary logical blocks, modules and circuits described in conjunction with the embodiments of the present disclosure. The processor 702 may be a central processing unit, a general-purpose processor, a digital signal processor, an application specific integrated circuit, a field programmable gate array or other programmable logic devices, a transistor logic device, a hardware component or any combination thereof. It may implement or execute various illustrative logical blocks, modules and circuits described in conjunction with the embodiments of the present disclosure. The processor 702 may also be a combination capable of implementing computing functions, for example, including a combination of one or more microprocessors, or a combination of a digital signal processor (DSP) and a microprocessor.

The communication interface 703 is configured to connect with other devices through a communication network. The communication network may be an Ethernet, a radio access network, a wireless local area network (WLAN), or the like.

The memory 701 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 701 may exist independently of the processor 702, and the memory 701 may be connected to the processor 702 via the bus 704 and is used for storing instructions or program codes. The processor 702, when calling and executing the instructions or program codes stored in the memory 701, is capable of implementing the demodulation reference signal transmission method provided in the embodiments of the present disclosure.

As another possible implementation, the memory 701 may also be integrated with the processor 702.

The bus 704 may be an extended industry standard architecture (EISA) bus or the like. Buses 704 may be divided into address buses, data buses, control buses, or the like. For ease of representation, only one bold line is used for the representation in FIG. 15, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the demodulation reference signal transmission method as described in any embodiment of the above-mentioned embodiments.

In an exemplary implementation, the computer may be the above-mentioned demodulation reference signal transmission apparatus, and the present disclosure does not limit the specific form of the computer.

In some examples, the above computer readable storage medium may include, but is not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card or a flash memory device (e.g., an erasable programmable read-only memory (Erasable Programmable Read-Only Memory, EPROM), a card, a stick or a key drive, etc.). The various computer-readable storage media described in the present disclosure may represent one or more devices and/or other machine-readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, when running on a computer, causes the computer to perform the demodulation reference signal transmission method as described in any embodiment of the above-mentioned embodiments.

The foregoing descriptions are merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

## Claims

1. A demodulation reference signal transmission method, **characterized in that** the method comprises:

   determining a time-frequency resource for a transmission signal, wherein the time-frequency resource comprises N resource blocks, and N is a positive integer;
   determining a mapping relationship between a demodulation reference signal corresponding to the transmission signal and the time-frequency resource; and
   mapping the demodulation reference signal in the time-frequency resource according to the mapping relationship and sending the demodulation reference signal, wherein the demodulation reference signal occupies x resource blocks, and x is a positive integer less than N.

2. The method according to claim 1, wherein the mapping relationship is used to indicate that the demodulation reference signal occupies x consecutive resource blocks on the N resource blocks.

3. The method according to claim 2, wherein a value or a value range of x is determined according to at least one of: a subcarrier spacing, a modulation and coding scheme (MCS) order, channel state information (CSI), a channel type, a number of re-transmissions of hybrid automatic repeat request (HARQ), and a size of a resource block group.

4. The method according to claim 3, wherein the value or the value range of x satisfies at least one of following relationships:

   the value or the value range of x satisfying a monotonically decreasing relationship with the subcarrier spacing;
   the value or value range of x satisfying a monotonically decreasing relationship with the MCS order;

the value or the value range of x satisfying a monotonically increasing relationship with the number of re-transmissions of the HARQ.

5. The method according to claim 1, wherein the mapping relationship is used to indicate that the x resource blocks occupied by the demodulation reference signal are x non-consecutive resource blocks among the N resource blocks.

6. The method according to claim 5, wherein

there is a resource block that is occupied by the demodulation reference signal in every y resource blocks, starting from a k-th resource block among the N resource blocks; or there are m resource blocks that are occupied by the demodulation reference signal in every y resource blocks, starting from a k-th resource block among the N resource blocks;
wherein y is a positive integer, and m is a positive integer less than or equal to y.

7. The method according to claim 6, wherein a value or a value range of y is determined according to at least one of: a subcarrier spacing, an MCS order, a channel type, channel state information, a number of re-transmissions of an HARQ, and a size of a resource block group.

8. The method according to claim 6, wherein a value or a value range of m is determined according to at least one of: a subcarrier spacing, an MCS order, a channel type, channel state information, a number of re-transmissions of an HARQ, and a size of a resource block group.

9. The method according to claim 1, wherein the method further comprises:
receiving frequency domain configuration information of the demodulation reference signal, wherein the frequency domain configuration information is used to determine the mapping relationship between the demodulation reference signal corresponding to the transmission signal and the time-frequency resource.

10. The method according to claim 9, wherein the frequency domain configuration information of the demodulation reference signal is carried in at least one of a broadcast message, a system message, and a control signaling.

11. The method according to claim 9, wherein the frequency domain configuration information of the demodulation reference signal is determined according to at least one of: channel state information (CSI), a number of users, and an HARQ configuration.

12. The method according to claim 9, wherein the frequency domain configuration information of the demodulation reference signal comprises at least one of following configuration parameters: the value of x, the value of y, the value of k, and the value of m.

13. The method according to claim 12, wherein the method further comprises:
receiving updated frequency domain configuration information, wherein the updated frequency domain configuration information comprises an updated configuration parameter.

14. The method according to claim 1, wherein a resource block occupied by the demodulation reference signal comprises a plurality of resource elements, and a resource element among the plurality of resource elements is used to carry the demodulation reference signal.

15. The method according to claim 1, wherein for different sending ends, time-frequency resources occupied by the demodulation reference signal within a same resource block group or on a bandwidth part are the same.

16. The method according to claim 1, wherein for different sending ends, time-frequency resources occupied by the demodulation reference signal are fixed.

17. A demodulation reference signal transmission method, **characterized in that** the method comprises:

determining a mapping relationship between a demodulation reference signal corresponding to a transmission signal and a time-frequency resource; and
receiving the demodulation reference signal in the time-frequency resource according to the mapping relationship, wherein the time-frequency resource comprises N resource blocks, the demodulation reference signal

16

occupies x resource blocks, N is a positive integer, and x is a positive integer less than N.

18. The method according to claim 17, wherein the mapping relationship is used to indicate that the demodulation reference signal occupies x consecutive resource blocks on the N resource blocks.

19. The method according to claim 18, wherein a value or a value range of x is determined according to at least one of: a subcarrier spacing, a modulation and coding scheme (MCS) order, channel state information (CSI), a number of re-transmissions of hybrid automatic repeat request (HARQ), and a size of a resource block group.

20. The method according to claim 19, wherein the value or the value range of x satisfies at least one of following relationships:

the value or the value range of x satisfying a monotonically decreasing relationship with the subcarrier spacing;
the value or value range of x satisfying a monotonically decreasing relationship with the MCS order;
the value or the value range of x satisfying a monotonically increasing relationship with the number of re-transmissions of the HARQ.

21. The method according to claim 17, wherein the mapping relationship is used to indicate that the x resource blocks occupied by the demodulation reference signal are x non-consecutive resource blocks among the N resource blocks.

22. The method according to claim 21, wherein

there is a resource block that is occupied by the demodulation reference signal in every y resource blocks, starting from a k-th resource block among the N resource blocks; or
there are m resource blocks that are occupied by the demodulation reference signal in every y resource blocks, starting from a k-th resource block among the N resource blocks; wherein y is a positive integer, and m is a positive integer less than or equal to y.

23. The method according to claim 22, wherein a value or a value range of y is determined according to at least one of: a subcarrier spacing, an MCS order, a channel type, channel state information, a number of re-transmissions of an HARQ, and a size of a resource block group.

24. The method according to claim 22, wherein a value or a value range of m is determined according to at least one of: a subcarrier spacing, an MCS order, a channel type, channel state information, a number of re-transmissions of an HARQ, and a size of a resource block group.

25. The method according to claim 17, wherein the method further comprises:
sending frequency domain configuration information of the demodulation reference signal, wherein the frequency domain configuration information is used to determine the mapping relationship between the demodulation reference signal corresponding to the transmission signal and the time-frequency resource.

26. The method according to claim 17, wherein for different receiving ends, time-frequency resources occupied by the demodulation reference signal within a same resource block group or on a bandwidth part are the same.

27. The method according to claim 17, wherein for different receiving ends, time-frequency resources occupied by the demodulation reference signal are fixed.

28. A communication apparatus, **characterized by** comprising: a memory and a processor; wherein the memory is coupled with the processor; the memory is configured to store instructions executable by the processor; and the processor, when executing the instructions, performs the method according to any one of claims 1 to 27.

29. A computer readable storage medium, **characterized in that** the computer readable storage medium has stored computer instructions thereon, the computer instructions, when executed on a communication apparatus, cause the communication apparatus to perform the method according to any one of claims 1 to 27.

10

Base
station 21

Base
station 22

Terminal 31          Terminal 32          Terminal 33          Terminal 34

FIG. 1

Determine a time-frequency resource for signal transmission,
wherein the time-frequency resource comprises N resource blocks, N
being a positive integer

S101

Determine a mapping relationship between a demodulation reference
signal and the time-frequency resource, which correspond to signal
transmission

S102

According to the mapping relationship, map the demodulation
reference signal in the time-frequency resource, and then send
same, wherein the demodulation reference signal occupies x
resource blocks, x being a positive integer less than N

S103

FIG. 2

Frequency /RB

RB

N resource blocks for sending signals

x RBs occupied by a DMRS

k-th RB

Time/OFDM symbol

☐ RBs occupied by the DMRS

☐ RBs unoccupied by the DMRS

FIG. 3

FIG. 4

FIG. 5

Frequency/
RB

⋮

Time/OFDM symbol

□ RBs occupied by the DMRS

□ RBs unoccupied by the DMRS

FIG. 6

Receive frequency domain configuration information of the demodulation reference signal — S201

Determine a mapping relationship between the demodulation reference signal corresponding to the transmission signal and a time-frequency resource according to the frequency domain configuration information of the demodulation reference signal — S202

FIG. 7

（a） Schematic diagram of RBG1 DMRS insertion

（b） Schematic diagram of RBG2 DMRS insertion

（c） Schematic diagram of RBG3 DMRS insertion

Frequency/
RB

RBG1

RBG2

RBG3

Time/OFDM symbol

（d） Schematic diagram of three
terminals inserting the DMRS

RBs with DMRS
inserted

RBs not with DMRS
inserted

RBs into which only terminal
1 and terminal 2 insert DMRS

RBs into which three
terminals insert DMRS

RBs into which only
terminal 3 inserts
DMRS

FIG. 8

Frequency/
RB

Frequency/
RB

Frequency/
RB

RB

RB

RB

a        Time/OFDM
symbol

b        Time/OFDM
symbol

c        Time/OFDM
symbol

■  RBs occupied by DMRS

□  RBs unoccupied by DMRS

FIG. 9

Frequency/
RB

Frequency/
RB

Frequency/
RB

RB

R
B

RB

Terminal 1

Terminal 1

Terminal 1

Terminal 2

Terminal 2

Terminal 2

a        Time/OFDM
symbol

b        Time/OFDM
symbol

c        Time/OFDM
symbol

■  RBs commonly occupied
by DMRSs of two terminals

[ ]  RBs unoccupied by
DMRS

┌ ┐  RBs only occupied by
└ ┘  DMRS of terminal 1

□  RBs only occupied by
DMRS of terminal 2

FIG. 10

Determine a mapping relationship between a demodulation reference signal corresponding to a transmission signal and a time-frequency resource ⟩ S301

Receive the demodulation reference signal in the time-frequency resource according to the mapping relationship, where the time-frequency resource includes N resource blocks, the demodulation reference signal occupies x resource blocks, N is a positive integer, and x is a positive integer less than N ⟩ S302

FIG. 11

Send frequency domain configuration information of a demodulation reference signal ⟩ S401

FIG. 12

Demodulation reference signal transmission apparatus 50

Processing module ⟩ 51

Communication module ⟩ 52

FIG. 13

Demodulation reference signal
transmission apparatus 60

Processing module — 61

Communication module — 62

FIG. 14

— 700

— 702        — 703

Processor    Communication
interface

— 704

Bus

Memory

— 701

FIG. 15

## INTERNATIONAL SEARCH REPORT

| International application No. |
| --- |
| **PCT/CN2024/070906** |

### A.    CLASSIFICATION OF SUBJECT MATTER

H04L5/00(2006.01)i

According to International Patent Classification (IPC) or to both national classification and IPC

### B.    FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABSC, VEN, CNKI: 解调参考信号, 映射, 对应, 资源单元, 资源块, 资源元素, 减少, 减小, 降低, 节省, 节约, 开销, demodulation reference signal, DMRS, mapping, correspondence, corresponding, resource block, PRB, RB, resource element, RE, decrease, reduce, save

### C.    DOCUMENTS CONSIDERED TO BE RELEVANT

| Category* | Citation of document, with indication, where appropriate, of the relevant passages | Relevant to claim No. |
| --- | --- | --- |
| X | CN 109391416 A (ZTE CORP.) 26 February 2019 (2019-02-26) claims 1-14, and description, paragraphs [0015]-[0076] | 1-29 |
| A | CN 114866211 A (HUAWEI TECHNOLOGIES CO., LTD.) 05 August 2022 (2022-08-05) entire document | 1-29 |
| A | CN 104081872 A (HUAWEI TECHNOLOGIES CO., LTD.) 01 October 2014 (2014-10-01) entire document | 1-29 |
| A | US 2021258940 A1 (LG ELECTRONICS, INC.) 19 August 2021 (2021-08-19) entire document | 1-29 |

☐ Further documents are listed in the continuation of Box C.        ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 March 2024** | **12 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070906**

| Patent document cited in search report | | | Publication date (day/month/year) | Patent family member(s) | | | Publication date (day/month/year) |
|---|---|---|---|---|---|---|---|
| CN | 109391416 | A | 26 February 2019 | WO | 2019029283 | A1 | 14 February 2019 |
| CN | 114866211 | A | 05 August 2022 | | None | | |
| CN | 104081872 | A | 01 October 2014 | WO | 2014113971 | A1 | 31 July 2014 |
| US | 2021258940 | A1 | 19 August 2021 | US | 11877275 | B2 | 16 January 2024 |
| | | | | WO | 2019235906 | A1 | 12 December 2019 |

Form PCT/ISA/210 (patent family annex) (July 2022)

**EP 4 708 752 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310516574